# EUROPÄISCHE PATENTSCHRIFT

(11) **EP 3 492 294 B1**
(45) Veröffentlichungstag und Bekanntmachung des Hinweises auf die Patenterteilung: **13.04.2022**
(21) Anmeldenummer: 18202480.2
(22) Anmeldetag: 25.10.2018
(51) Int. Cl.: B60K 17/22, B60K 17/346

(54) **UMLENKGETRIEBEANORDNUNG**
RE-DIRECTING GEARBOX ARRANGEMENT
ENSEMBLE DE BOÎTES DE RENVERSEMENT

(30) Priorität: 29.11.2017 DE 102017221376
(43) Veröffentlichungstag der Anmeldung: 05.06.2019
(73) Patentinhaber: ZF Friedrichshafen AG, 88046 Friedrichshafen (DE)
(72) Erfinder: Reitinger, Franz, 4092 Esternberg (AT); Solka, Ulrich, 94081 Fuerstenzell (DE); Mühlbauer, Alexander, 94575 Windorf (DE)
(74) Vertreter: ZF Friedrichshafen AG

(56) Entgegenhaltungen:
- DE-A1-102004 038 518
- GB-A- 767 420
- US-A- 5 725 453
- US-A1- 2005 205 329

## Beschreibung

Die vorliegende Erfindung betrifft ein Verfahren zum Herstellen einer Umlenkgetriebeanordnung zum Uberbrücken eines Achsversatzes zwischen einer Antriebswelle und mindestens einer Abtriebswelle eines Kraftfahrzeugs mit mehreren angetriebenen Radachsen gemäß der im Oberbegriff des Patentanspruchs 1 näher definierten Art.

Aus der Fahrzeugtechnik sind Fahrzeuge bekannt, die zwischen der Motor- und Getriebeeinheit einerseits und der Abtriebswelle andererseits einen Achsversatz aufweisen. Dabei kann es sich sowohl um einen Höhenversatz als auch um einen seitlichen Versatz oder eine Kombination aus beidem handeln. Es ist weiterhin bekannt, dass Stirnradgetriebe zum Überwinden des Achsversatzes verwendet werden können. Das Versatzgetriebe umfasst hierzu beispielsweise mehrere Stufen, um den benötigten Versatz zu realisieren. Hierzu sind eine Vielzahl von entsprechenden Wellen bzw. Rädern notwendig, die dann die Stirnradstufen bilden. Ebenso ist es bekannt, einen Achsversatz mittels eines Kegelradwinkeltriebs und einer Kardanwelle zu überwinden.

In diesem Zusammenhang beschreibt die DE 42 01 513 A1 einen Omnibus, dessen Hinterräder von einem Antriebsaggregat im Bereich der Hinterräder antreibbar sind. Ein Abtrieb des Antriebsaggregats umfasst einen seitlichen Kegelrad-Winkeltrieb mit schräg nach unten führender Abtriebswelle. Die Abtriebswelle ist über eine mehrteilige und längenvariable Kardanwelle mit einem weiteren Kegelrad-Winkeltrieb verbunden, welcher wiederum ein Hinterachs-Differential antreibt.

Weitere Umlenkgetriebeanordnungen sind aus der US 2005/205329 A1, GB 767 420 A und DE 10 2004 038518 A1 bekannt.

Die bekannten Getriebeanordnungen zum Ausgleich eines Achsversatzes zwischen Wellen sind jedoch aus unterschiedlichen Gründen nachteilbehaftet. Sofern der Achversatz mittels einer oder mehrerer Stirnradstufen überwunden werden soll, so stellt sich eine derartige Getriebeanordnung nicht nur als bauraumaufwändig, sondern darüber hinaus als unflexibel und teuer dar, da die verwendeten Stirnräder speziell für den zu überwindenden Achsversatz aufeinander abgestimmt werden müssen. Sofern der Achsversatz mittels Kegeltrieben und einer zwischengeschalteten Kardanwelle überwunden werden soll, so wird die sich hieraus prinzipiell ergebende Flexibilität im Stand der Technik noch nicht voll ausgeschöpft.

Der vorliegenden Erfindung liegt die Aufgabe zu Grunde, ein verbessertes Verfahren zum Herstellen einer Umlenkgetriebeanordnung zum Ausgleich eines Achsversatzes vorzuschlagen. Die Umlenkgetriebeanordnung soll bauraumsparend und kostengünstig ausgeführt sein. Insbesondere soll auf aufwändige und teure Stirnradstufen verzichtet werden.

Diese Aufgabe wird erfindungsgemäß durch die Merkmale des Patentanspruchs 1 gelöst, wobei sich vorteilhafte Ausgestaltungen aus den Unteransprüchen und der Beschreibung sowie den Zeichnungen ergeben.

Daraus ergibt sich zunächst der Vorteil, dass eine äußerst flexibel anpassbare und sehr einfach aufgebaute Umlenkgetriebeanordnung zur Verfügung gestellt wird, welche auch das Überbrücken von vergleichsweise großen Achsversätzen mit nur geringem Aufwand ermöglicht. Indem auf eine starre und längenstabile, also nicht längenvariable, Verbindungswelle zum Verbinden des ersten Winkelgetriebes mit dem zweiten Winkelgetriebe zurückgegriffen wird, ist auch die Verbindung zwischen den Winkeltrieben sehr einfach und kostengünstig aufgebaut. Auf eine längenvariable Verbindungswelle kann erfindungsgemäß ebenso vorteilhaft verzichtet werden wie auf eine Gelenkwelle, weil durch geschicktes Ausnutzen der schwingfähigen Radachsenaufhängungen ggf. notwendige, betriebsbedingte Ausgleichsbewegungen zwischen einem Antriebsaggregat, welches der Umlenkgetriebeanordnung trieblich vorgeschaltet ist, und den Radachsen ermöglicht werden. Das Ermöglichen von Ausgleichsbewegungen zwischen derm ersten und dem zweiten Winkelgetriebe sind im Gegensatz zum Stand der Technik somit nicht erforderlich.

Insbesondere kann auf aufwändige, schwere und teure Stirnradstufen verzichtet werden.

Ein weiterer Vorteil ist in der Anzahl der Freiheitsgrade der erfindungsgemäßen Umlenkgetriebeanordnung bei der Überbrückung des Achsversatzes zu sehen. So ist es beispielsweise nicht notwendig, dass die Antriebswelle und die mindestens eine Abtriebswelle achsparallel ausgerichtet sind. Vielmehr können sie in beliebigem Winkel zueinander stehen. Eine fahrzeugmittige Anordnung ist ebenso möglich wie eine seitliche oder schräge Anordnung im Kraftafhrzeug.

Bei dem Achsversatz kann es sich um einen Höhenversatz oder einen Seitenversatz oder eine Kombination von beidem handeln.

Gemäß einer bevorzugten Ausführungsform der Erfindung ist es vorgesehen, dass die Umlenkgetriebeanordnung weiterhin ein schaltbares Kraftfahrzeuggetriebe umfasst, welches dem ersten Winkelgetriebe trieblich vorgeschaltet ist, wobei das erste Winkelgetriebe räumlich beabstandet zum Kraftfahrzeuggetriebe und in einem eigenen Gehäuse angeordnet ist. Bei dem schaltbaren Kraftfahrzeuggetriebe handelt es sich um das Hauptgetriebe des Kraftfahrzeugs, welches üblicherweise direkt mit dem Motor des Kraftfahrzeugs verbunden ist und eine Ausgangsdrehzahl und ein Ausgangsdrehmoment des Motors je nach eingelegter Gangstufe wandelt und über eine Abtriebswelle des Kraftfahrzeuggetriebes ausgibt. Über diese Abtriebswelle ist das Kraftfahrzeuggetriebe bevorzugt mit dem ersten Winkelgetriebe gekoppelt. Indem das erste Winkelgetriebe ein eigenes Gehäuse aufweist und vom Kraftfahrzeuggetriebe räumlich beabstandet ist, erhöht sich die Flexibilität der erfindungsgemäßen Umlenkgetriebeanordnung noch weiter. Es ist nämlich vorteilhaft nicht notwendig, das erste Winkelgetriebe baulich in oder an das Gehäuse des Kraftfahrzeuggetriebe zu koppeln.

Gemäß einer besonders bevorzugten Ausführungsform der Erfindung ist es vorgesehen, dass das Kraftfahrzeuggetriebe und das erste Winkelgetriebe mittels einer starren und längenstabilen Verbindungswelle verbunden sind. Daraus ergibt sich der Vorteil, dass auch die Verbindung zwischen dem Kraftfahrzeuggetriebe und dem ersten Winkelgetriebe besonders einfach, kostengünstig und gewichtssparend ausgebildet ist.

Gemäß der Erfindung ist es vorgesehen, dass die Verbindungswellen als längenangepasste Steckwellen ausgebildet sind. D.h. also, dass die Steckwellen auf die jeweils zur Herstellung der individuellen Umlenkgetriebeanordnung erforderlichen Längen abgelängt werden. Dies ermöglicht das Vorhalten und Erzeugen einer großen Zahl identischer Steckwellen, wodurch sich die Herstellungskosten stark reduzieren lassen.

Dabei werden Steckwellen in verschiedenen Längenkategorien erzeugt und vorgehalten, beispielsweise in den Kategorien "kurz", "mittel" und "lang". Obwohl sich hierdurch die Teilevielfalt erhöht, kann dennoch eine Kostenersparnis generiert werden, wenn die abzulängende Steckwelle vor dem Ablängen nicht wesentlich länger als notwendig ist, sich der erzeugte Abfall also auf ein Minimum beschränkt.

Gemäß einer weiteren bevorzugten Ausführungsform der Erfindung ist es vorgesehen, dass die Winkelgetriebe als Kegelradgetriebe ausgeführt sind. In Verbindung mit den Verbindungswellen können die Winkelgetriebe insbesondere unabhängig voneinander anordbar sein, d.h. der Achsversatz kann aufgrund der veränderbaren Wellenlängen nahezu beliebig variiert werden.

Gemäß einer weiteren bevorzugten Ausführungsform der Erfindung ist es vorgesehen, dass dem zweite Winkelgetriebe zwei Abtriebswellen zugeordnet sind, wobei mittels jeder der zwei Abtriebswellen jeweils eine Radachse des Kraftahrzeugs antreibbar ist.

Das zweite Winkelgetriebe ist dabei bevorzugt räumlich zwischen den beiden antreibbaren Radachsen angeordnet und zu beiden Radachsen beabstandet, wobei die Beabstandung zu einer der beiden Radachsen größer oder kleiner sein kann als zur anderen Radachse. Eine derartige, räumlich Trennung des zweiten Winkelgetriebes von den beiden antreibbaren Radachsen über die jeweiligen Abtriebswellen ermöglicht zudem vorteilhaft ein Ein- bzw. Ausfedern der Räder bzw. der Radachsen, ohne dass die Bewegung bzw. Schwingung auf das zweite Winkelgetriebe und somit auf die Umlenkgetriebeanordnung übertragen wird. Dies wiederum trägt dazu bei, dass eine Ausbildung des Umlenkgetriebes mit starren Verbindungswellen begünstigt wird.

Gemäß einer weiteren bevorzugten Ausführungsform der Erfindung ist es vorgesehen, dass ein Abtriebsdifferential in das Gehäuse des zweiten Winkelgetriebes integriert ist. Dadurch kann ein Antriebsmoment bedarfsangepasst auf die beiden antreibbaren Radachsen übertragen werden.

Bevorzugt umfasst das Abtriebsdifferential auch eine Diffferentialsperre, um das Abtriebsdifferential zu sperren.

Gemäß einer weiteren bevorzugten Ausführungsform der Erfindung ist es vorgesehen, dass der erste Winkeltrieb einen Durchtrieb umfasst. Daraus ergibt sich der Vorteil, dass z.B. ein Nebenabtrieb bereitgestellt werden kann, etwa in Form einer Zapfwelle. Der Nebenabtrieb ist bevorzugt zu- und abschaltbar ausgebildet.

Gemäß einer weiteren bevorzugten Ausführungsform der Erfindung ist es vorgesehen, dass das erste Winkelgetriebe und das zweite Winkelgetriebe bauidentische Gleichteile sind. Somit kann eine hohe Anzahl von Gleichteilen hergestellt und bevorratet werden, was die Herstellungskosten je Teil reduziert. Es wird also die kostengünstige Herstellung des Umlenkgetriebes begünstigt. Zudem bietet sich durch die Verwendung von Gleichteilen eine erhöhte Flexibilität bei der Auslegung der Umlenkgetriebeeinheit, da alle Teile untereinander beliebig kombinierbar sind.

Bevorzugt ist es vorgesehen, dass das erste Winkelgetriebe derart in die Umlenkgetriebeeinheit eingebaut wird, dass durch das erste Winkelgetriebe eine Übersetzung der Drehzahl ins Schnelle erfolgt. Das zweite Winkelgetriebe wird bevorzugt derart in derart in die Umlenkgetriebeeinheit eingebaut wird, dass durch das zweite Winkelgetriebe eine Übersetzung der Drehzahl ins Langsame erfolgt. Da besonders bevorzugt beide Winkelgetriebe bauidentische Gleichteile sind, wird die Drehzahlhochsetzung durch das erste Winkelgetriebe also vom zweiten Winkelgetriebe wieder exakt rückgängig gemacht.

Gemäß einer weiteren bevorzugten Ausführungsform der Erfindung ist es vorgesehen, dass die Antriebswelle und die mindestens eine Abtriebswelle achsparallel angeordnet sind.

Gemäß einer weiteren bevorzugten Ausführungsform der Erfindung ist es vorgesehen, dass die Umlenkgetriebeanordnung weiterhin eine Schalteinheit zum Schalten von Gangstufen umfasst. Indem die Umlenkgetriebeanordnung eine derartige Schalteinheit umfasst, kann auf einfache Weise der Nutzwert der Umlenkgetriebeanordnung dahingehend erhöht werden, dass unterschiedliche Gangstufen bzw. Drehzahlübersetzungen innerhalb der Umlenkgetriebeanordnung schaltbar sind. Der dadurch entstehende zusätzliche Bauraumbedarf ist vergleichsweise gering und immer noch deutlich geringer als der Bauraumbedraf eines entsprechenden Achsversatzausgleichs mittels Stirnrädern.

Auch die Schalteinheit ist für unterschiedliche spezifische Ausbildungsformen von Achsversätzen bzw. Fahrzeugen vorteilhafterweise immer wieder als Gleichteil, bzw. als aus Gleichteilen bestehend, ausgebildet.

Durch die Kombination der bauidentischen Winkelgetriebe mit den Verbindungswellen und der Schalteinheit ist ein modularer und hochflexibler Aufbau der Umlenkgetriebeanordnung möglich, d.h. es gibt eine große Anzahl Gleichteile, die bedarfsweise kombiniert werden können, ohne dass eine aufwändige Umgestaltung der einzelnen Getriebekomponenten und insbesondere der Getriebegehäuse notwendig ist.

Gemäß einer besonders bevorzugten Ausführungsform der Erfindung ist es vorgesehen, dass die Schalteinheit zwischen dem ersten Winkelgetriebe und dem zweiten Winkelgetriebe angeordnet ist. Der Vorteil dieser Anordnung der Schalteinheit liegt darin, dass das erste und das zweite Winkelgetriebe stets als Gleichteile ausgebildet sein können, da die Schalteinheit unabhängig und beabstandet von den beiden Winkelgetrieben angeordnet wird.

Bevorzugt weist die Schalteinheit in diesem Fall ein eigenes Gehäuse auf.

Gemäß einer weiteren besonders bevorzugten Ausführungsform der Erfindung ist es vorgesehen, dass die Schalteinheit in ein Gehäuse des ersten Winkelgetriebes oder in ein Gehäuse des zweiten Winkelgetriebes integriert ist. Hierduch erhöht sich zwar die Teilevielfalt dahingehend, dass nebem einem einfachen Gehäuse für das entsprechende Winkelgetriebe ein weiteres Gehäuse für das Winkelgetriebe mit integrierbarer Schalteinheit vorgesehen werden muss, jedoch kann andererseits ein gesondertes Gehäuse für das Schaltegtriebe eingespart werden.

Gemäß einer weiteren bevorzugten Ausführungsform der Erfindung ist es vorgesehen, dass das erste und das zweite Winkelgetriebe ein gemeinsames, nicht-ölführendes Gehäuse aufweisen. Das Gehäuse übernimmt in diesem Fall also ausschließlich eine Distanzfunktion, um alle Elemente des ersten und des zweiten Winkelgetriebes im richtigen Abstand zueinander zu halten. Somit muss nicht jedes Winkelgetriebe einzeln für sich am Fahrzeugrahmen befestigt werden.

Das gemeinsame Gehäuse bietet bevorzugt auch Raum zur Aufnahme der Schalteinheit.

Die Erfindung betrifft weiterhin ein Kraftfahrzeug mit mehreren angetriebenen Radachsen, umfassend eine nach dem Verfahren nach mindestens einem der Ansprüche 1 bis 11 hergestellte Umlenkgetriebeanordnung.

Gemäß einer bevorzugten Ausführungsform der Erfindung ist es vorgesehen, dass das Kraftfahrzeug ein Kranfahrzeug ist.

Besonders bevorzugt weist das Kranfahrzeug fünf antreibbare Radachsen auf, wobei zwei der fünf Radachsen unmittelbar von Abtriebswellen des zweiten Winkelgetriebes antreibbar sind und die restlichen drei Radachsen über Achsdurchtriebe antreibbar sind.

Die Erfindung betrifft schließlich auch ein Baukastensystem zum Herstellen einer erfindungsgemäßen Umlenkgetriebeanordnung, umfassend ein Vielzahl von bauidentischen Winkelgetrieben und eine Vielzahl von ablängbaren Steckwellen. Indem das Baukastensystem alle Einzelelemente zum Herstellen der erfindungsgemäßen Umlenkgetriebeanordnung in Vielzahl umfasst und indem diese ohne weitere Anpassungsarbeiten miteinander kombinierbar sind, kann mittels des erfindungsgemäßen Baukastensystems ohne besonderen Entwicklungsaufwand für jeden Fahrzeugtyp eine geeignete Umlenkgetriebeanordnung hergestellt werden. Lediglich ein Ablängen der Steckwellen auf die erforderliche Länge kann notwendig sein.

Bevorzugt ist es vorgesehen, dass das Baukastensystem auch eine Vielzahl von bauidentischen Schalteinheiten umfasst.

Nachfolgend wird die vorliegende Erfindung anhand der Zeichnungen weiter erläutert. Es zeigen:
Figur 1 eine schematische Seitenansicht einer möglichen Ausführungsvariante einer erfindungsgemäßen Umlenkgetriebeanordnung am Beispiel eines Kranfahrzeugs,
Figur 2 eine schematische Ansicht der erfindungsgemäßen Umlenkgetriebeanordnung und
Figur 3 eine schematische Ansicht einer weiteren Ausbildungsform der erfindungsgemäßen Umlenkgetriebeanordnung.

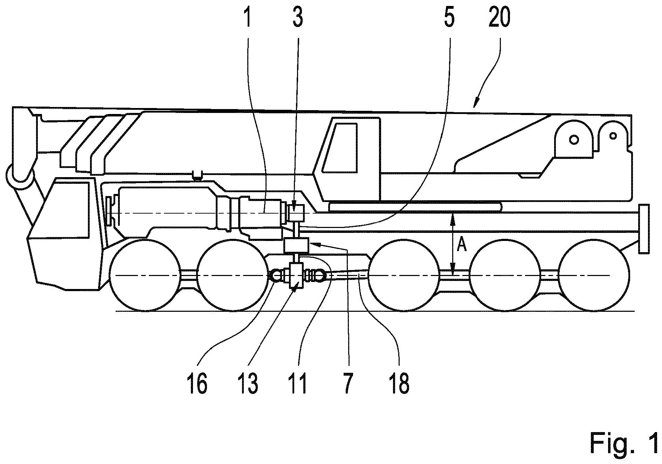

In den Figuren 1, 2 und 3 ist eine mögliche Ausführungsvariante exemplarisch anhand eines Kranfahrzeuges 20 dargestellt.

Aus Figur 1 ist ersichtlich, dass die Motor-und Getriebeeinheit des Kranfahrzeuges mit der Antriebswelle 1 deutlich höher angeordnet ist, als die erste Abtriebswelle 16 und die zweite Abtriebswelle 18. Hierdurch ergibt sich der Achsversatz A einerseits zwischen der Antriebswelle 1 und den Abtriebswellen 16,18, die im Bereich der angetriebenen Achsen des Kranfahrzeuges 20 angeordnet sind. Dieser Achsversatz A wird durch die erfindungsgemäße Getriebeanordnung mit den beiden Winkelgetrieben 3,13 auf einfachste Weise überwunden. Eine Schalteinheit 7 ist zwischen dem ersten Winkelgetriebe 3 und dem zweiten Winkelgetriebe 13 angeordnet.

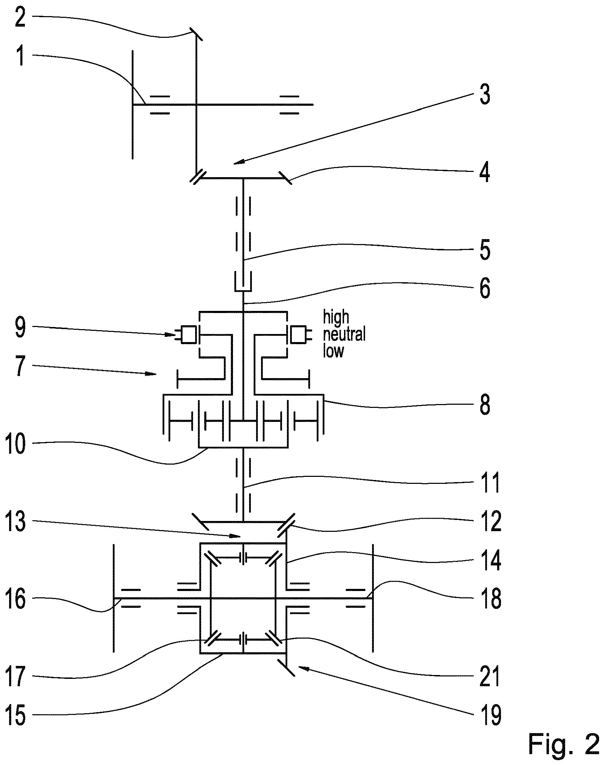

Figur 2 zeigt schematisch den Aufbau der vorgeschlagenen Umlenkgetriebeanordnung. Das erste Kegelradgetriebe 3 ist der Antriebswelle 1 und das zweite Kegelradgetriebe 13 ist den Abtriebswellen 16,18 zugeordnet. Bei der hier dargestellten Ausführungsvariante ist eine Schalteinheit 7 separat zwischen dem ersten Kegelradgetriebe 3 und dem zweiten Kegelradgetriebe 13 angeordnet. Es ist jedoch ohne weiteres denkbar, dass das Planetengetriebe bzw. die Schalteinheit 7 in das erste Winkelgetriebe 3 oder in das zweite Winkelgetriebe 13 integriert sind. Mit der Schalteinheit 7 ist es möglich, eine mehrstufige Variante als Umlenkgetriebeanordnung zu realisieren, mittels der beispielsweise zwischen einer hohen Übersetzung "high" und einer niedrigen Übersetzung "low" sowie Neutral "neutral" schaltbar ist. Ein Abtriebsdifferential 19 des Kranfahrzeuges 20 ist bei der dargestellten Ausführungsvariante in das Gehäuse des zweiten Kegelradgetriebes 13 integriert. Es ist jedoch ohne weiteres auch möglich, dass das Abtriebsdifferential 19 separat angeordnet wird.

Im Detail ergibt sich aus der schematischen Darstellung gemäß Figur 2, dass die Antriebswelle 1 mit einem Tellerrad 2 des ersten Kegelradgetriebes 3 in Eingriff steht. Ein Kegelritzel 4 des ersten Kegelradgetriebes 3 ist über eine erste Verbindungswelle 5 mit einem Sonnenrad 6 des als Schalteinheit 7 ausgeführten Planetengetriebes 7 verbunden. Ein Hohlrad des Planetengetriebes ist mit einer Schaltmuffe 9 der Schalteinheit 7 verbunden. Ein Planetenradträger 10 des Planetengetriebes ist über eine zweite Verbindungswelle 11 mit einem Kegelritzel 12 des zweiten Kegelradgetriebes 13 verbunden. Ein Tellerrad 14 des zweiten Kegelradgetriebes 13 ist mit einem Differenzialkorb 15 des Abtriebsdifferentials 19 verbunden, wobei die erste Abtriebswelle 16 mit einem ersten Achskegelrad 17 und die zweite Abtriebswelle 18 mit einem zweiten Achskegelrad 21 des Abtriebsdifferential 19 antriebsmäßig verbunden sind.

Die vorgeschlagene Umlenkgetriebeanordnung wird nur beispielhaft anhand des Kranfahrzeuges dargestellt. Die Umlenkgetriebeanordnung kann zum Ausgleich eines Achsversatzes A auch bei anderen Fahrzeugen ohne weiteres eingesetzt werden.

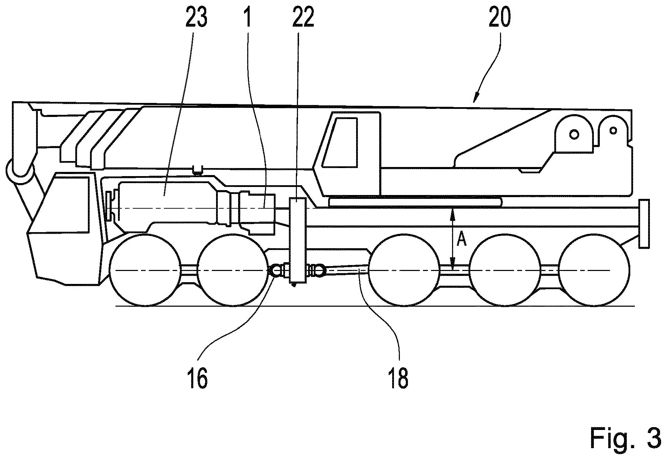

Figur 3 zeigt schematisch und beispielhaft eine weitere Ausbildungsform der erfindungsgemäßen Umlenkgetriebeanordnung in einem Kranfahrzeug 20. Beispielsgemäß umfasst die Umlenkgetriebeanordnung für das erste Winkelgetriebe 3 und für das zweite Winkelgetriebe 13 ein gemeinsames, nicht-ölführendes Gehäuse 22. Wie weiterhin zu sehen ist, ist das gemeinsame Gehäuse 22 bzw. der erste Winkeltrieb 3 beabstandet zu einem schaltbaren Kraftfahrzeuggetriebe 23 angeordnet. Die Antriebswelle 1 des Kraftfahrzeuggetriebes 23 ist dabei aus dem Kraftfahrzeuggetriebe 23 herausgeführt, um den Abstand zum gemeinsamen Gehäuse 22 bzw. zum ersten Winkelgetriebe 3 im gemeinsamen Gehäuse zu überbrücken. Das Gehäuse 23 dient dabei ausschließlich der Ausrichtung und festen Anordnung des ersten Winkelgetriebes 3 und des zweiten Winkelgetriebes 13 zueinander, ohne dass diese separat am Kranfahrzeug 20 befestigt werden müssen. Ein Ölkreislauf zum Kühlen bzw. Schmieren des ersten Winkelgetriebes 3 und des zweiten Winkelgetriebes 13 wird vom Gehäuse 23 nicht bereitgestellt. Somit ist das Gehäuse 23 vergleichsweise einfach, leichtgewichtig und kostengünstig ausgebildet.

### Bezugszeichen

- 1: Antriebswelle
- 2: Tellerrad
- 3: erstes Kegelradgetriebes bzw. Winkelgetriebe
- 4: Kegelritzel
- 5: erste Verbindungswelle
- 6: Sonnenrad
- 7: Planetengetriebe als Schalteinheit
- 8: Hohlrad
- 9: Schaltmuffe
- 10: Planetenradträger
- 11: zweite Verbindungswelle
- 12: Kegelritzel
- 13: zweites Kegelradgetriebe bzw. Winkelgetriebe
- 14: Tellerrad
- 15: Differenzialkorb
- 16: erste Abtriebswelle
- 17: erstes Achskegelrad
- 18: zweite Abtriebswelle
- 19: Abtriebsdifferential
- 20: Kranfahrzeug
- 21: zweites Achskegelrad
- 22: gemeinsames Gehäuse
- 23: schaltbares Kraftfahrzeuggetriebe
- A: Achsversatz
- high: hohe Übersetzungsstufe
- low: niedrige Übersetzungsstufe
- neutral: Neutral bzw. Leerlauf

## Patentansprüche

1. Verfahren zum Herstellen einer Umlenkgetriebeanordnung zum Überbrücken eines Achsversatzes (A) zwischen einer Antriebswelle (1) und mindestens einer Abtriebswelle (16,18) eines Kraftfahrzeugs mit mehreren angetriebenen Radachsen, umfassend ein erstes Winkelgetriebe (3) und ein zweites Winkelgetriebe (13), wobei das erste Winkelgetriebe (3) der Antriebswelle (1) zugeordnet ist und das zweite Winkelgetriebe (13) der mindestens einen Abtriebswelle (16, 18) zugeordnet ist, wobei das erste Winkelgetriebe und das zweite Winkelgetriebe mittels einer starren und längsstabilen Verbindungswelle (5, 11) verbunden sind,
wobei eine Vielzahl von bauidentischen Winkelgetrieben und eine Vielzahl von ablängbaren Steckwellen bereitgestellt werden,
**dadurch gekennzeichnet, dass** die Steckwellen in verschiedenen Längenkategorien erzeugt und vorgehalten werden und dass die Steckwellen auf die jeweils zur Herstellung der individuellen Umlenkgetriebeanordnung erforderlichen Längen abgelängt werden.

2. Verfahren nach Anspruch 1, 2- **dadurch gekennzeichnet, dass** dem ersten Winkelgetriebe ein schaltbares Kraftfahrzeuggetriebe trieblich vorgeschaltet wird, wobei das erste Winkelgetriebe räumlich beabstandet zum Kraftfahrzeuggetriebe und in einem eigenen Gehäuse angeordnet wird.

3. Verfahren nach Anspruch 2,
**dadurch gekennzeichnet, dass** das Kraftfahrzeuggetriebe und das erste Winkelgetriebe mittels einer starren und längenstabilen Verbindungswelle verbunden werden.

4. Verfahren nach mindestens einem der Ansprüche bis 3, **dadurch gekennzeichnet, dass** die Winkelgetriebe (3,13) als Kegelradgetriebe ausgeführt werden.

5. Verfahren nach mindestens einem der Ansprüche bis 4, **dadurch gekennzeichnet, dass** dem zweite Winkelgetriebe zwei Abtriebswellen (16,18) zugeordnet werden, wobei mittels jeder der zwei Abtriebswellen (16,18) jeweils eine Radachse des Kraftahrzeugs antreibbar ist.

6. Verfahren nach mindestens einem der Ansprüche bis 5, **dadurch gekennzeichnet, dass** ein Abtriebsdifferential (19) in das Gehäuse des zweiten Winkelgetriebes (13) integriert wird.

7. Verfahren nach mindestens einem der Ansprüche bis 6, **dadurch gekennzeichnet, dass** der erste Winkeltrieb einen Durchtrieb umfasst.

8. Verfahren nach mindestens einem der Ansprüche bis 7, **dadurch gekennzeichnet, dass** die Antriebswelle (1) und die mindestens eine Abtriebswelle (16,18) achsparallel angeordnet werden.

9. Verfahren nach mindestens einem der Ansprüche bis 8, **dadurch gekennzeichnet, dass** die Umlenkgetriebeanordnung weiterhin eine Schalteinheit (7) zum Schalten von Gangstufen umfasst.

10. Verfahren nach Anspruch 9, **dadurch gekennzeichnet, dass** die Schalteinheit (7) in ein Gehäuse des ersten Winkelgetriebes (3) oder in ein Gehäuse des zweiten Winkelgetriebes (13) integriert wird.

11. Verfahren nach mindestens einem der Ansprüche bis 10, **dadurch gekennzeichnet, dass** das erste und das zweite Winkelgetriebe ein gemeinsames, nicht-ölführendes Gehäuse aufweisen.

12. Kraftfahrzeug (20) mit mehreren angetriebenen Radachsen, umfassend eine nach dem Verfahren nach einem der Ansprüche 1 bis 11 hergestellte Umlenkgetriebeanordnung.

13. Kraftfahrzeug (20) nach Anspruch 12, **dadurch gekennzeichnet, dass** das Kraftfahrzeug (2) ein Kranfahrzeug (20) ist.

## Claims

1. Method for producing a deflection gear arrangement for bridging an axial offset (A) between a drive shaft (1) and at least one output shaft (16, 18) of a motor vehicle with a plurality of driven wheel axles, comprising a first angular gear (3) and a second angular gear (13), the first angular gear (3) being assigned to the drive shaft (1) and the second angular gear (13) being assigned to the at least one output shaft (16, 18), the first angular gear and the second angular gear being connected by means of a rigid and longitudinally stable connecting shaft (5, 11), a multiplicity of structurally identical angular gears and a multiplicity of stub shafts which can be can be cut to size being provided, **characterized in that** the stub shafts are produced and stored in different length categories, and **in that** the stub shaft lengths which are required in each case for producing the individual deflection gear arrangement are cut to size.

2. Method according to Claim 1, **characterized in that** a shiftable motor vehicle transmission is connected in drive terms upstream of the first angular gear, the first angular gear being arranged spaced apart spatially from the motor vehicle transmission and in a dedicated housing.

3. Method according to Claim 2, **characterized in that** the motor vehicle transmission and the first angular gear are connected by means of a rigid and longitudinally stable connecting shaft.

4. Method according to at least one of Claims 1 to 3, **characterized in that** the angular gears (3, 13) are configured as bevel gear mechanisms.

5. Method according to at least one of Claims 1 to 4, **characterized in that** the second angular gear is assigned two output shafts (16, 18), it being possible for in each case one wheel axle of the motor vehicle to be driven by means of each of the two output shafts (16, 18).

6. Method according to at least one of Claims 1 to 5, **characterized in that** an output differential (19) is integrated into the housing of the second angular gear (13) .

7. Method according to at least one of Claims 1 to 6, **characterized in that** the first angle drive comprises a through-connected drive.

8. Method according to at least one of Claims 1 to 7, **characterized in that** the drive shaft (1) and the at least one output shaft (16, 18) are arranged in an axially parallel manner.

9. Method according to at least one of Claims 1 to 8, **characterized in that** the deflection gear arrangement comprises, furthermore, a shifting unit (7) for shifting gear stages.

10. Method according to Claim 9, **characterized in that** the shifting unit (7) is integrated into a housing of the first angular gear (3) or into a housing of the second angular gear (13).

11. Method according to at least one of Claims 1 to 10, **characterized in that** the first and the second angular gear have a common housing which does not conduct oil.

12. Motor vehicle (20) with a plurality of driven wheel axles, comprising a deflection gear arrangement which is produced in accordance with the method according to one of Claims 1 to 11.

13. Motor vehicle (20) according to Claim 12, **characterized in that** the motor vehicle (20) is a crane vehicle (20).

## Revendications

1. Procédé de fabrication d'un agencement de mécanisme de renvoi pour couvrir un décalage d'essieu (A) entre un arbre d'entrée (1) et au moins un arbre de sortie (16, 18) d'un véhicule automobile avec plusieurs essieux de roue entraînés, comprenant un premier engrenage d'angle (3) et un deuxième engrenage d'angle (13), le premier engrenage d'angle (3) étant associé à l'arbre d'entrée (1) et le deuxième engrenage d'angle (13) étant associé à l'au moins un arbre de sortie (16, 18), le premier engrenage d'angle et le deuxième engrenage d'angle étant reliés au moyen d'un arbre de liaison (5, 11) rigide et longitudinalement stable,
une pluralité d'engrenages d'angle de construction identique et une pluralité d'arbres d'emboîtement pouvant être tronçonnés étant fournis,
**caractérisé en ce que** les arbres d'emboîtement sont produits et tenus à disposition en différentes catégories de longueurs et **en ce que** les arbres d'emboîtement sont tronçonnés aux longueurs respectivement nécessaires pour la fabrication de l'agencement de mécanisme de renvoi individuel.

2. Procédé selon la revendication 1, **caractérisé en ce qu'**une transmission de véhicule automobile commutable est montée en transmission en amont du premier engrenage d'angle, le premier engrenage d'angle étant agencé à distance dans l'espace de la transmission de véhicule automobile et dans un boîtier propre.

3. Procédé selon la revendication 2, **caractérisé en ce que** la transmission de véhicule automobile et le premier engrenage d'angle sont reliés au moyen d'un arbre de liaison rigide et longitudinalement stable.

4. Procédé selon au moins l'une quelconque des revendications 1 à 3, **caractérisé en ce que** les engrenages d'angle (3, 13) sont réalisés sous forme d'engrenages à roues coniques.

5. Procédé selon au moins l'une quelconque des revendications 1 à 4, **caractérisé en ce que** deux arbres de sortie (16, 18) sont associés au deuxième engrenage d'angle, un essieu de roue du véhicule automobile pouvant être entraîné au moyen de chacun des deux arbres de sortie (16, 18).

6. Procédé selon au moins l'une quelconque des revendications 1 à 5, **caractérisé en ce qu'**un différentiel de sortie (19) est intégré dans le boîtier du deuxième engrenage d'angle (13).

7. Procédé selon au moins l'une quelconque des revendications 1 à 6, **caractérisé en ce que** le premier engrenage d'angle comprend un relais de transmission.

8. Procédé selon au moins l'une quelconque des revendications 1 à 7, **caractérisé en ce que** l'arbre d'entrée (1) et l'au moins un arbre de sortie (16, 18) sont agencés de manière axialement parallèle.

9. Procédé selon au moins l'une quelconque des revendications 1 à 8, **caractérisé en ce que** l'agencement de mécanisme de renvoi comprend en outre une unité de commutation (7) pour commuter des rapports de vitesse.

10. Procédé selon la revendication 9, **caractérisé en ce que** l'unité de commutation (7) est intégrée dans un boîtier du premier engrenage d'angle (3) ou dans un boîtier du deuxième engrenage d'angle (13).

11. Procédé selon au moins l'une quelconque des revendications 1 à 10, **caractérisé en ce que** le premier et le deuxième engrenage d'angle présentent un boîtier commun, non conducteur d'huile.

12. Véhicule automobile (20) avec plusieurs essieux de roue entraînés, comprenant un agencement de mécanisme de renvoi fabriqué par le procédé selon l'une quelconque des revendications 1 à 11.

13. Véhicule automobile (20) selon la revendication 12, **caractérisé en ce que** le véhicule automobile (20) est un véhicule à grue (20).
